# EUROPÄISCHE PATENTSCHRIFT

(11) **EP 1 716 301 B1**
(45) Veröffentlichungstag und Bekanntmachung des Hinweises auf die Patenterteilung: **15.08.2012**
(21) Anmeldenummer: 05707136.7
(22) Anmeldetag: 02.02.2005
(51) Int. Cl.: E04H 17/10, A01G 17/14

(54) **WEINBERGPFAHL**
VINE STAKE
PIQUET POUR VIGNE

(30) Priorität: 13.02.2004 DE 102004007470; 15.06.2004 DE 202004009482 U
(43) Veröffentlichungstag der Anmeldung: 02.11.2006
(73) Patentinhaber: Dr. Reisacher Winzerbedarf GmbH, 73765 Neuhausen (DE)
(72) Erfinder: Reisacher Raimund, 76863 Herxheim (DE)
(74) Vertreter: Kesselhut, Wolf
(86) Internationale Anmeldenummer: PCT/EP2005/001005
(87) Internationale Veröffentlichungsnummer: WO 2005/078215

(56) Entgegenhaltungen:
- DE-A1- 4 436 936
- DE-C1- 19 629 023

## Beschreibung

Die Erfindung betrifft einen Weinbergpfahl gemäß dem Oberbegriff von Anspruch 1.

Für Drahtrahmen im Wein- und Obstbau werden offene oder geschlossene Metallprofile verwendet, die an den Schenkeln außenliegende Haken aufweisen, die durch Ausstanzen und Formbiegen von Zungen aus dem Grundmaterial gebildet sind.

Derartige Metallprofile - die nachfolgend als Weinbergpfähle bezeichnet werden - sind beispielsweise aus der DE 44 36 936 C2 (ausgesteifte, geprägte Haken), DE 196 52 597 A1 (S-förmige, in Höhe der Ausstanzung liegende Haken), der DE 196 29 023 C1 (taillierte S-förmige Haken) sowie der DE 299 11 927 U1 (innenliegende Haken) bekannt.

Bei den in den zuvor genannten Schriften beschriebenen Metallprofilen ergibt sich das Problem, dass die Metallzungen der Haken oberhalb der zugehörigen Stanzöffnung liegen, und beim Einsatz von Vollerntemaschinen durch deren Schlagstäbe leicht schräg in die Stanzöffnungen hineingedrückt werden können, so dass ein anschließendes Einhängen des Drahtes in den betreffenden Haken nicht mehr ohne weiteres möglich ist. Des weiteren sind die an den Haken gebildeten Gleitflächen für die Drähte im Inneren der Ösen technisch bedingt mit Stanzgraten behaftet, so dass bei stumpfen Stanzwerkzeugen das Gleiten des Drahtes oftmals erheblich eingeschränkt ist.

Die DE-A-35 22 140 beschreibt eine pfahlartige Halterung für Netze, Planen und Folien, die eine Stange umfasst, welche Haken in Form von aus dem Blech der Stange ausgeklinkten zungenförmigen Abschnitten aufweist. Obgleich die Enden der ausgeklinkten zungenförmigen Abschnitte von einer darunter liegenden Öffnung im Bleichmaterial in Rückwärtsrichtung umgebogen sind, erstrecken sich die zungenförmigen Abschnitte über die Stanzöffnung hinweg, und sind im Bereich der Mitte der Stanzöffnung in Rückwärtsrichtung gebogen. Demgemäss können die Haken bei Schlageinwirkung von außen leicht in die Stanzöffnungen hinein gedrückt werden. Darüber hinaus eignet sich die beschriebene pfahlartige Halterung auch aufgrund ihrer Formgebung und Flexibilität nicht zum Einsatz als Weinbergpfahl.

Die FR-A-1 380 669 beschreibt einen Zaunpfahl mit einem kreisförmigen Querschnitt, an dessen Außenseite in rückwärtiger Richtung umgebogene laschenartige Haken durch Anschweißen befestigt sind. Die Schrift gibt keinen Hinweis darauf, die Haken durch Ausstanzen von zungenförmigen Abschnitten und Rückbiegen derselben unmittelbar aus dem Material des Grundkörpers des Pfahls zu erzeugen.

Die DE-A-2 529 395 beschreibt einen Pflanzenstab für Weinstöcke, der einen Grundkörper mit einem V-förmigen Querschnitt besitzt, bei dem zum Fixieren von Weinbergdrähten zungenförmige Abschnitte aus dem Schenkel des Grundkörpers herausgetrennt sind, die zur Fixierung des Drahtes im Bereich der Mitte der zungenförmigen Abschnitt von der Außenseite des Schenkels weg in etwa schraubenförmig um den Draht herum gewickelt werden. Hierbei ist der zungenförmige Abschnitt nicht in Rückwärtsrichtung gebogen, sondern der Draht wird zwischen der mit Stanz oder Schnittgraten behafteten Außenfläche des Schenkels und dem zungenförmigen Abschnitt eingespannt. Durch das schraubenförmige Herumwickeln des zungenförmigen Abschnittes wird zudem keine zur Außenfläche des Schenkels parallele Fläche zum Einlegen oder Einklippen des Drahtes erhalten.

Demgemäß ist es eine Aufgabe der vorliegenden Erfindung, einen Pfahl der eingangs genannten Art sowie ein Verfahren zur Herstellung eines solchen zu schaffen, bei dem die Haken auch beim Einsatz von Vollerntern durch die auftretenden Schläge nicht mehr in die zugehörigen Stanzlöcher eingedrückt werden können, und bei dem die typischen Gleit- und Auflageflächen für die Drähte ohne störende Stanzgrate ausgebildet sind.

Diese Aufgabe wird erfindungsgemäß durch die Merkmale von Anspruch 1 und 19 gelöst.

Weitere Merkmale sind in den Unteransprüchen beschrieben.

Ein besonderer Vorteil der erfindungsgemäßen Weinbergpfähle besteht darin, dass die Haken leicht mit Sicken gerundet werden können, wodurch diese nicht nur eine definierte Drahtanlagekante oder Gleitfläche erhalten, sondern zudem auch eine höhere Festigkeit aufweisen. Die erfindungsgemäßen Weinbergpfähle besitzen den Vorteil, dass die Haken aufgrund der auf der gegenüberliegenden Seite der Außenfläche der Schenkel angeordneten Stanzöffnungen nicht in diese eingeschlagen werden können, so dass die Haken vollernterfest sind.

Weiterhin ergibt sich eine Materialersparnis - und damit eine Kostenersparnis -, da durch die rückgebogene Ausgestaltung der Haken diese bis an die Oberkante des beim Einschlagen und beim Herausziehen besonders beanspruchten Profilkopfes herangeführt werden können, ohne den Profilkopf durch die Stanzöffnungen zu schwächen. Hierdurch kann der Pfahl um ca. 25 mm eingekürzt werden, wobei sich zudem auch weniger Probleme mit sogenannten Überzeilengeräten beim Aufsetzen des Pfahlkopfes ergeben. \

Weiterhin liegt der beim Ausstanzen der zungenförmigen Abschnitte zwangsweise entstehende Schnittgrad nicht an der Innenfläche des ösen- oder schlaufenförmigen gebogenen Aufnahmeabschnitts für den Draht an, sondern an der Außenfläche desselben, so dass infolge der Dicke des Metallblechs ein hinreichender Abstand zwischen dem Schnittgrad und dem eingelegten Draht besteht, durch den eine Beschädigung der Drähte oder ein Klemmen beim Herausziehen derselben wirksam vermieden werden.

Ein weiterer Vorteil der erfindungsgemäßen Pfähle besteht darin, dass alle Anlageflächen sehr einfach mit Sicken versehen werden können, da die Prägewerkzeuge konzentriert an der Mittelachse der zungenförmigen Abschnitte angreifen können, und nicht an die äußeren Schnittkanten herangeführt werden müssen, wodurch sich in der Regel Probleme hinsichtlich der Fertigungstoleranzen beim Nachprägen ergeben, wenn durch das Schnittloch oder Stanzloch hindurch nachgeprägt werden muss.

Ein weiterer Vorteil besteht darin, dass bei einer S-förmigen Ausgestaltung des Hakens die Sicken sich teilweise natürlich durch die gewählte Biegerichtung des Materials beim Formen des Hakens aus dem zungenförmigen Abschnitt ergeben, wodurch die Fertigung zum Teil erheblich erleichtert wird. Weiterhin eröffnet sich bei den erfindungsgemäßen Pfählen die Möglichkeit, dass die Sicken zum Versteifen der Haken sehr gezielt positioniert werden können, wodurch sich die Elastizität der Haken von einer sehr steifen Ausführung bis zu einer in hohem Maße flexiblen Ausgestaltung der Haken oder einzelner Bereiche derselben verändern lässt.

Ein weiterer Vorteil bei der Fertigung des erfindungsgemäßen Pfahls besteht darin, dass die Lebensdauer der Schneidstempel zum Heraustrennen der zungenförmigen Abschnitte, die anschließend in erfindungsgemäßer Weise in die gewünschte Hakenform gebogen werden, sehr hoch ist, da kein Hohlschliff, sondern ein Dachschliff zum Einsatz gelangen kann.

Insbesondere ist es möglich, durch das Umbiegen der zungenförmigen Abschnitte in Rückwärtsrichtung, dh. von der Stanzöffnung weg, sehr große ösenförmige oder schlaufenförmige Aufnahmeabschnitte für die Drähte zu erhalten, die einen ausgesteiften Ansatz besitzen, insbesondere dann, wenn die Sicken vor dem Biegen der zungenförmigen Abschnitte als zentrale Längssicken in die zungenförmigen Abschnitte eingeprägt werden.

Ein weiterer Vorteil der erfindungsgemäßen Ausführungsform ist darin zu sehen, dass das Stanzloch zu einem großen Teil frei unterhalb der Haken liegt und hierdurch für weitere Applikationen, beispielsweise für Kunststoff-Einsätze oder Klammern zum Niederhalten der Drähte zur Verfügung steht, was z.B. bei den zu Anfang genannten Haken des Standes der Technik, bei denen die Stanzöffnungen in der Regel durch die zungenförmigen Abschnitte überdeckt werden, nicht der Fall ist.

Ein insbesondere in Hinblick auf eine hohe Lebensdauer der Drähte besonderer Vorteil der erfindungsgemäßen Pfähle besteht darin, dass der Draht aufgrund der wohldefinierten zentral entlang der gesamten Innenseite des zungenförmigen Abschnitts verlaufenden Sicke durch diese im Bereich des Zungengrundes von der Außenfläche des zugehörigen Schenkels entfernt gehalten wird, da er auf der im Zungengrund entspringenden Sicke infolge der Schwerkraft geringfügig nach unten gleitet, und damit stets im Abstand zur Außenseite des Pfahlschenkels positioniert wird. Hierdurch kann eine Kontaktkorrosion durch Feuchtigkeit und chemische Substanzen, wie sie beispielsweise in den Spritzmitteln für Weintrauben enthalten sind, von vornherein vermieden werden, da sich anders als beim Stand der Technik, zwischen der Außenfläche des Pfahlschenkels und dem Draht selber keine Feuchtigkeit sammeln kann, wie dies bei Pfählen des Standes der Technik infolge der Oberflächenspannung der Flüssigkeiten häufig zu beobachten ist. Zudem wird dem Draht ein besseres Gleitverhalten verliehen, so dass es erheblich seltener zu einem Verklemmen oder zu einem Verkanten desselben beim Herausziehen kommt.

Weiterhin weist der erfindungsgemäße Pfahl den Vorteil auf, dass eine seitlich auf das freie Hakenende einwirkende Kraft, wie sie beispielsweise durch die Schlagelemente eines Vollernters erzeugt wird, im Gegensatz zu den bekannten Haken, bei denen der zungenförmige Abschnitt über der Stanzöffnung angeordnet ist, aufgrund der erfindungsgemäßen Ausgestaltung nicht zu einer Drehmomenteinleitung in den Pfahlschenkel führt, welche durch eine durch den Zungengrund aufzuwendende erhöhte Stützkraft ausgeglichen werden muss, die sehr leicht zu einer Deformation und damit zu Rissen im Bereich den Zungengrundes führen kann. Dies ist darauf zurückzuführen, dass der bogenförmige Aufnahmeabschnitt das Drehmoment in sich aufnehmen kann.

Die Erfindung wird nachfolgend mit Bezug auf die Zeichnungen anhand von bevorzugten Ausführungsformen beschrieben.

In den Zeichnungen zeigen:
- Fig. 1: eine schematische räumliche Darstellung eines erfindungsgemäßen Weinbergpfahls,
- Fig. 2: eine schematische räumliche Seitenansicht einer bevorzugten S-förmigen Ausgestaltung eines Hakens,
- Fig. 3: eine Querschnittsansicht eines erfindungsgemäßen Hakens, bei dem sich an den C-förmig ausgestalteten bogenförmigen Aufnahmeabschnitt für den Draht ein im Winkel nach außen abgespreizter im Wesentlichen geradliniger Endabschnitt anschließt, der eine Drahteinlegeöffnung definiert,
- Fig. 4: eine weitere Ausführungsform des erfindungsgemäßen Hakens, bei dem sich an den C-förmigen Aufnahmeabschnitt ein im Wesentlicher geradliniger Führungsabschnitt anschließt, der in Richtung zur Außenseite des Pfahlschenkels hin verläuft,
- Fig. 5: eine weitere Ausführungsform des erfindungsgemäßen Hakens, bei dem sich an den bogenförmigen Aufnahmeabschnitt ein parallel zur Außenseite des Pfahlschenkels verlaufender geradliniger Abschnitt sowie ein sich an diesen anschließender, zur Außenfläche des Pfahlschenkels weisender bogenförmiger Endabschnitt anschließt, durch den sich eine O-förmige geschlossene Öse ergibt,
- Fig. 6: eine weitere Ausführungsform des in Fig. 5 gezeigten Hakens, bei dem das Ende des gebogenen Endabschnitts in eine in der Außenfläche des Pfahlschenkels gebildete Vertiefung eingelegt ist,
- Fig. 7a, 7b: eine weitere Ausführungsform der Erfindung, bei dem der Haken als Doppelhaken ausgestaltet ist,
- Fig. 8a, 8b: eine weitere Ausführungsform eines Doppelhakens, bei dem die Endkanten der geradlinigen Abschnitt parallel im Winkel zueinander verlaufen, um ein Herausspringen des Drahtes unter seitlicher Zugbeanspruchung zu verhindern,
- Fig. 9a: eine schematische Seitendarstellung eines ersten Verfahrensschritts bei der Herstellung eines erfindungsgemäßen Pfahls, in der in einem kombinierten Stanz- und Prägevorgang der zungenförmige Abschnitt aus dem Schenkel des Pfahls herausgestanzt und gleichzeitig mit einer sickenförmigen Prägung sowie einem abgewinkelten Ende versehen wird, welches beim fertigen Endprodukt eine sich erweiternde Einlegeöffnung für den Draht definiert,
- Fig. 9b: eine Aufsicht auf den in dem Verfahrensschrift von Fig. 9a geprägten zungenförmigen Abschnitt,
- Fig. 10: ein weiterer Verfahrensschritt bei der Herstellung des erfindungsgemäßen Hakens, bei dem der vorgeprägte und abgewinkelte zungenförmige Abschnitt von der Stanzöffnung weg durch einen von unten her eingebrachten Prägestempel in eine im Wesentlichen senkrecht zur Außenseite des Pfahlschenkels verlaufende Position gebogen wird,
- Fig. 11: ein weiterer Verfahrensschritt , bei dem der zungenförmige Abschnitt aus der Position von Fig. 10 durch ein weiteres, parallel zur Außenfläche des Pfahlschenkels bewegtes Prägewerkzeug sowie eine auf der anderen Seite des zungenförmigen Abschnitts angeordnete Prägematrize in die endgültige S-Form gebogen wird,
- Fig. 12: eine Querschnittsansicht durch den zungenförmigen Abschnitt zur Verdeutlichung der im Innenbereich des bogenförmigen Aufnahmeabschnitts gebildeten konvexen Wölbung mit einem schematisch dargestellten Draht, und
- Fig. 13: eine weitere Ausführungsform des erfindungsgemäßen Hakens, bei dem sich an den C-förmigen Aufnahmeabschnitt ein im Wesentlicher geradliniger Führungsabschnitt sowie ein Endabschnitt anschließt, der eine teller- oder löffelförmige, zur Außenfläche des Schenkels hin konvexe Auswölbung aufweist.

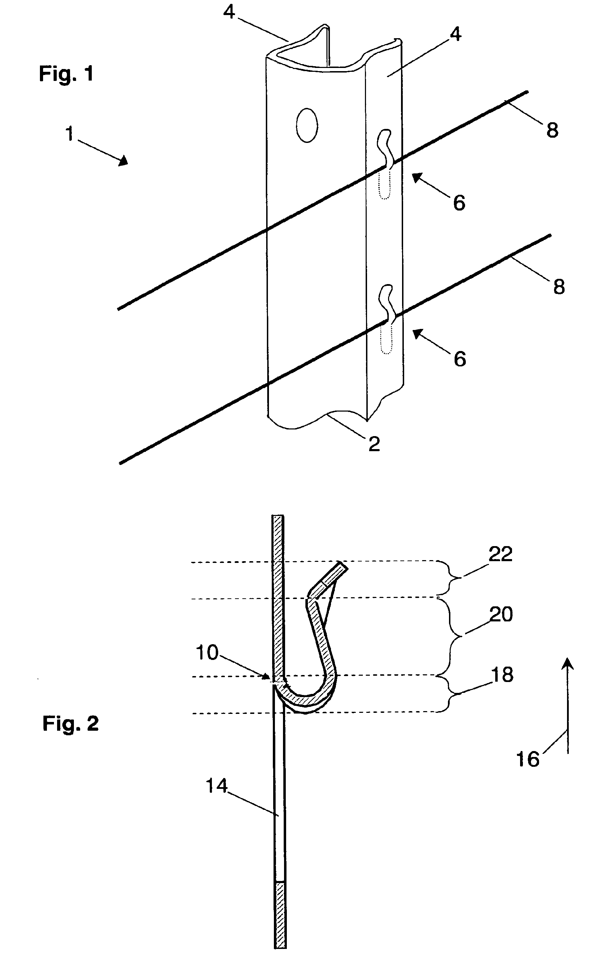

Wie in Fig. 1 gezeigt ist, umfasst ein erfindungsgemäßer Weinbergpfahl 1 einen aus Metallblech, insbesondere aus Stahlblech geformten Grundkörper 2, der einen im Wesentlichen U-förmigen Querschnitt mit Schenkeln 4 aufweist, an denen erfindungsgemäße Haken 6 zur Aufnahme von Weinbergdrähten 8 gebildet sind.

Die Haken 6 werden hierbei gemäß der Darstellung von Fig. 2 durch Stanzen und Biegen eines sich von einem Zungengrund 10 aus zu einem freien Ende hin erstreckenden zungenförmigen Abschnitts 12 aus dem Metallblech erzeugt.

Wie der Darstellung von Fig. 2 weiterhin im Detail zu entnehmen ist, weist der zungenförmige Abschnitt einen von der entstehenden Stanzöffnung 14 um wenigstens 90° in die durch den Pfeil 16 verdeutlichte Rückwärtsrichtung gebogenen Aufnahmeabschnitt 18 auf, der bei der in Fig. 2 gezeigten Ausführungsform der Erfindung im Wesentlichen C-förmig ausgestaltet ist und durch gestrichelte Linien angedeutet wird.

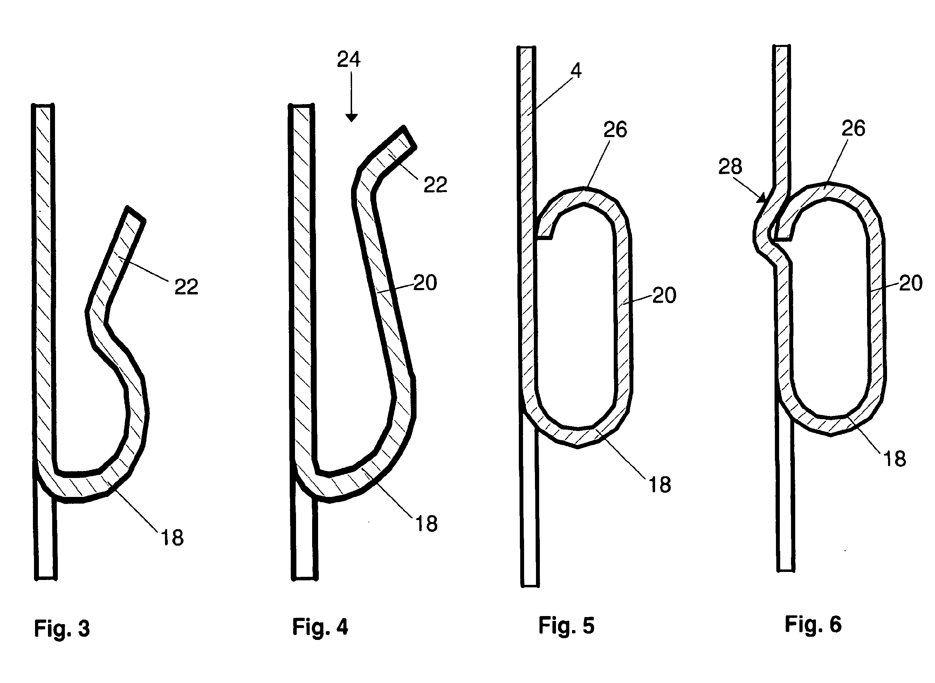

Wie der Fig.2 sowie der zu dieser korrespondierenden Querschnittsdarstellung von Fig. 4 weiterhin entnehmbar ist, schließt sich an den bogenförmigen Aufnahmeabschnitt 18, der vorzugsweise C-förmig ist, jedoch auch U-förmig oder in anderer Weise bogenförmig ausgestaltet sein kann, ein im Wesentlichen geradliniger Führungsabschnitt 20 an, der bei der in den Figuren 2 und 4 gezeigten Ausführungsform der Erfindung vorzugsweise im spitzen Winkel in Richtung zur Außenfläche des Schenkels 4 hin verläuft, jedoch gemäß der Ausgestaltung von Fig. 5 und 6 in gleicher Weise auch in einer im Wesentlichen parallel zur Außenfläche des Schenkels 4 verlaufenden Ebene angeordnet sein kann, wenn eine geschlossene Öse zur Aufnahme des Drahtes 8 gewünscht ist.

Hierbei ist es von besonderer Bedeutung, dass bis auf einen durch die Stärke der Krümmung des Abschnitts 18 bedingten Teilbereich desselben der Abschnitt 18 zumindest teilweise, und der sich anschließende Führungsabschnitt 20 vollständig außerhalb der Stanzöffnung 14 über einem geschlossenen Bereich der Außenfläche des Schenkels 4 angeordnet sind, so dass die Außenfläche im Falle einer Schlageinwirkung von außen her als Stützfläche dient, die ein Eindrücken der Haken insbesondere in die Stanzöffnung 14 verhindert.

Gemäß der Darstellung von Fig. 3 kann sich unmittelbar an den bogenförmigen Abschnitt 18 oder auch an den geradlinigen Abschnitt 20 des Hakens 6 ein Endabschnitt 22 anschließen, der vorzugsweise ebenfalls geradlinig ausgestaltet ist, und sich in einem Winkel von beispielsweise 45° gegenüber der Außenfläche des Schenkels 4 von dieser weg erstreckt, um eine sich erweiternde Einlegeöffnung 24 für den Draht 8 zu definieren.

Die Ausrichtung des zungenförmigen Abschnitts, bzw. des bogenförmigen Aufnahmeabschnitts 18 ist bevorzugt derart, dass sich dieser entlang einer im Wesentlichen parallel zur Längsachse des Pfahls und vorzugsweise senkrecht zur Außenfläche des zugehörigen Schenkels 4 verlaufenden gedachten Ebene erstreckt, wobei bevorzugt auch der Führungsabschnitt 20 und/oder der Endabschnitt 22 in dieser Ebene verlaufen.

Gemäß der in den Figuren 5 und 6 gezeigten Ausführungsform der Erfindung besteht ebenfalls die Möglichkeit, dass sich an Stelle des nach außen gerichteten Endabschnitts 22 an den in diesem Falle vorzugsweise parallel zur Außenfläche des Schenkels 4 verlaufenden geradlinigen Abschnitts 20 ein bogenförmiger Endabschnitt 26 anschließt, dessen freies Ende, wie in Fig. 5 gezeigt, mit der Außenseite an der Außenfläche des Schenkels 4 anliegt, oder gemäß der Ausführungsform von Fig. 6 vorzugsweise in einer in der Außenfläche, bzw. dem Material des Schenkels 4 gebildeten Vertiefung 28 aufgenommen ist.

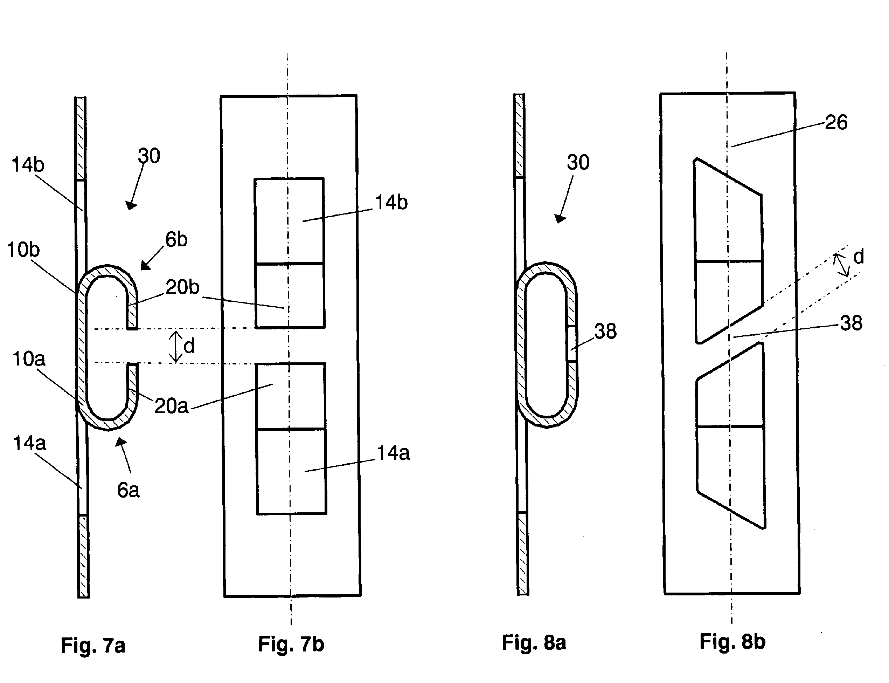

Gemäß einer weiteren Ausgestaltung der Erfindung sind zur Bildung eines in den Figuren 7a bis 8b gezeigten Doppelhakens 30 ein erster Haken 6a sowie ein hierzu spiegelbildlich ausgestalteter weiterer Haken 6b gemeinsam in dichtem Abstand zueinander angeordnet, wobei sich die freien Enden der im Wesentlichen geradlinigen Führungsabschnitte 20a und 20b der betreffenden Haken in einem Abstand d unter Bildung eines Spalts 38 gegenüberliegen, der gleich oder geringfügig größer als der Durchmesser eines Drahtes 8 ist. Auch hier werden die spiegelbildlich zueinander ausgebildeten Haken 6a und 6b des Doppelhakens 30 durch Ausstanzen von zugehörigen zungenförmigen Abschnitten 14a, 14b und Umbiegen derselben vom zugehörigen Zungengrund 10a, bzw. 10b weg in Rückwärtsrichtung aufeinander zu erzeugt, wobei der vom jeweiligen Zungengrund 10a, 10b aus entspringende bogenförmige Aufnahmeabschnitt im Falle der Ausführungsform nach den Figuren 7a bis 8d vorzugsweise im Wesentlichen C-förmig ausgebildet ist.

Bei der in Fig. 8a und 8b gezeigten Ausführungsform der Erfindung verläuft der zwischen den Endabschnitten der geradlinigen Abschnitte 20a, 20b verlaufende Spalt 38 in einem Winkel von beispielsweise 45° zur Mittelebene 36 des betreffenden Doppelhakens 30, so dass der Draht vor dem Einlegen um einen solchen Winkel aus der Horizontalen herausgedreht werden muss, um diesen durch den entstehenden Spalt 38 in den Aufnahmebereich einführen zu können.

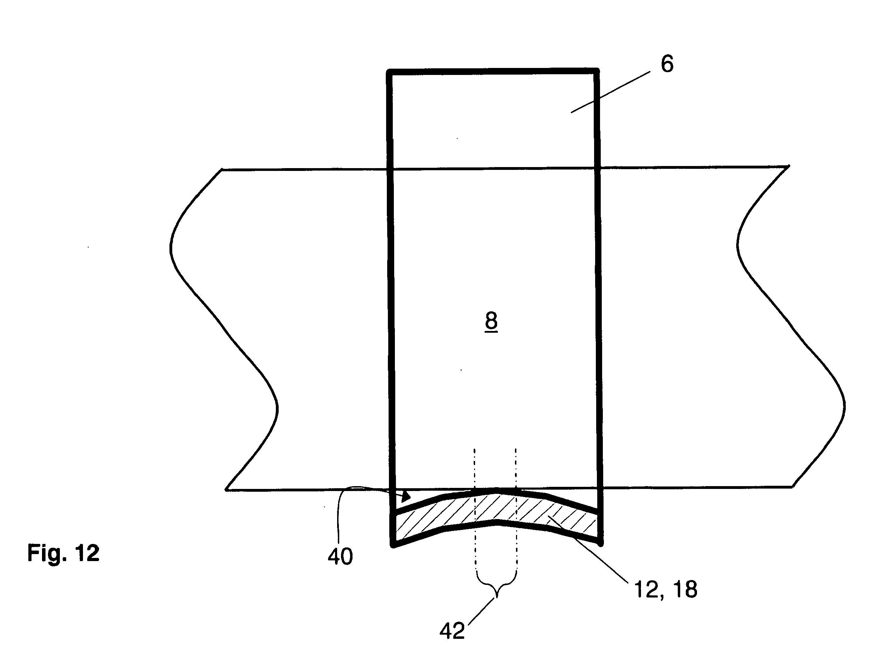

Wie in Fig. 12 gezeigt ist, weist der zungenförmige Abschnitt 12 im Bereich des bogenförmigen Aufnahmeabschnitts 18 eine im Innenbereich des ösenförmigen Aufnahmebereichs, in welchem der Draht 8 durch den Haken 6 hindurchläuft, angeordente konvexe Wölbung 40 auf, die sich von der Mitte des zungenförmigen Abschnitts 12 vorzugsweise symmetrisch, beispielsweise nach Art eines Sattels oder einer Sicke zu den Rändern des zungenförmigen Abschnitts 12 hin erstreckt. Die konvexe Wölbung 40 definiert hierbei einen im Bereich der zentralen Mittelebene des Hakens 6 entlang des bogenförmigen Aufnahmeabschnitts 18, bzw. vorzugsweise auch entlang des im Wesentlichen geradlinigen Abschnitts 20 sowie der Endabschnitte 22 und 26 der zuvor beschriebenen Ausführungsformen verlaufende konvex gewölbte Anlagefläche 42, entlang welcher der Draht 8 mit geringer Reibung und ohne die Gefahr von herausstehenden Graten gleiten kann.

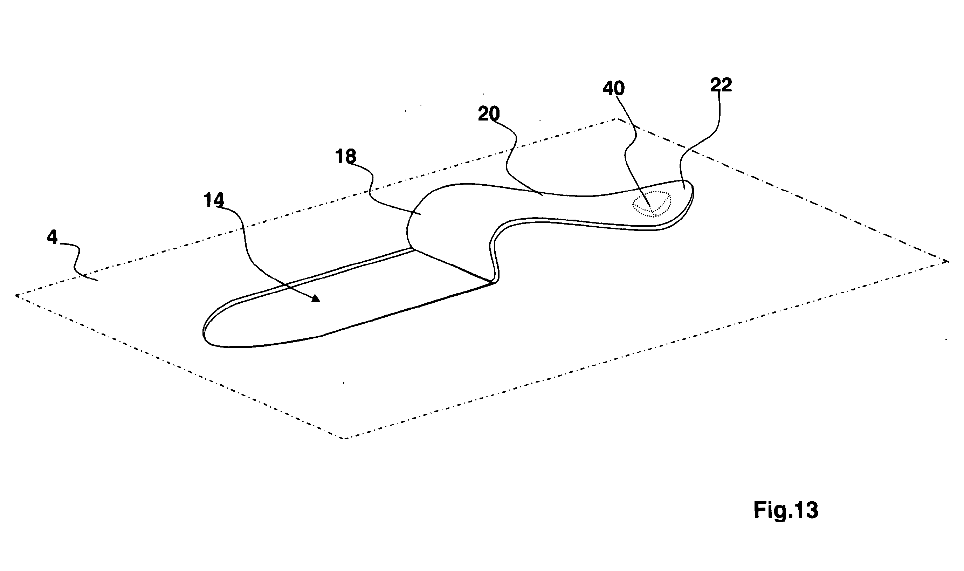

Wie weiterhin in Fig. 13 gezeigt ist, kann es vorgesehen sein, dass der geradlinige Endabschnitt 22 im Wesentlichen parallel zur Außenfläche 4 oder auch geringfügig schräg von dieser weg verläuft, und die in Richtung zur Außenfläche des Schenkels 4 hin weisende konvexe Wölbung als eine tellerförmige Vertiefung 40a ausgestaltet ist, die durch ein geeignetes Prägewerkzeug bevorzugt in den Endabschnitt 22 eingebracht wird, wobei weitere Sicken zur zusätzlichen Versteifung vorzugsweise in den Aufnahmeabschnitt 18 und/oder in den Führungsabschnitt 20 eingebracht sind.

Die tellerförmige oder löffelförmige Vertiefung 40a hat dabei eine Tiefe von z.B. 0,5 bis 3 mm. Gewünschten Falls kann der Endabschnitt 22 hierbei gegenüber dem Führungsabschnitt 20 z.B. kreis- oder ellipsenförmig erweitert sein, um an den Rändern einen größeren Abstand von der Außenfläche des Schenkels 4 zu erhalten und das Einlegen des Drahtes 8 zu erleichtern. Hierbei ist die Wölbung vorzugsweise zentral in den insbesondere kreisoder ellipsenförmig ausgestalteten erweiterten Endabschnitt 22 eingebracht, derart, dass der die Einlegeöffnung 24 definierende Abstand zwischen der Außenfläche des Schenkels 4 und der der Außenfläche zugewandten Seite der tellerförmigen Vertiefung 40a im Bereich des Drahtdurchmessers liegt, z.B. im Bereich von 0,5 bis 3 mm.

Die zuvor beschriebene Ausführungsform der Erfindung besitzt den Vorteil, dass die Schläger von Vollerntern nur sehr geringen Belastungen ausgesetzt sind, da keine Hakenspitzen hervorstehen, und die Schläger nur auf ebene Flächen mit abgerundeten Kanten treffen, insbesondere dann, wenn die scharfen äußeren Schnittkanten - wie bei der bevorzugten Ausführungsform - beim Prägen abgedrückt werden.

Ein weiterer Vorteil besteht darin, dass eine in mechanischer Hinsicht sehr stabile Tellerausprägung erzeugt wird, die bei den üblicherweise eingesetzten Materialien und Materialstärken durch die Schläger der Vollerntern nicht deformierbar ist, und hierdurch von den Vollerntern - anders als bei den in herkömmlicher Weise geformten zungeförmigen Haken ohne Versteifungen - nicht zugeschlagen werden kann. Zudem lässt sich die tellerförmige Geometrie der Vertiefungen 40a beim Tiefziehen der Haken leicht und ohne übermäßigen Werkzeugverschleiß erhalten und auch sehr genau einhalten.

Ein weiterer Vorteil der zuvor beschriebenen Ausführungsform besteht darin, dass die tellerförmige Vertiefung 40a gleichzeitig auch den übrigen zungenförmigen Abschnitt 12 versteift, so dass dieser ebenfalls widerstandsfähiger gegenüber Deformationen wird, und zusätzliche sickenförmige Wölbungen oder Vertiefungen zur Verstärkung des zungenförmigen Abschnitts 12 mitunter entfallen können, was die Werkzeugkosten reduziert und den Herstellungsprozess beschleunigt.

Schließlich gleitet der Draht 8 beim Einführen ausschließlich über Radien und nicht über Kanten, wodurch sich stabile Gleitverhältnisse ergeben, da der Draht nicht mit Schnittgraten in Eingriff gelangt. Dies führt insbesondere dazu, dass sich wohl definierte Ein- und Auslegekräfte für die Drähte ergeben, und zudem Kunststoffdrähte, bzw. mit Kunststoff ummantelter Drähte einsetzbar sind, die sonst durch die scharfen Schnittgrate/Kanten leicht beschädigt werden.

Zur Herstellung des erfindungsgemäßen Pfahls wird der Grundkörper 2 in bekannter Weise aus einem entsprechend breiten und gegebenenfalls mit Vorstanzungen versehenem streifenförmigen Metallblech in die in Fig. 1 gezeigte Form gebogen, und dann durch ein von der Innenseite 60 her eingebrachtes Stanz- und Prägewerkzeug 62 in die entsprechende Form gebracht, welches mit einer auf der Außenseite des Schenkels 4 angeordneten Stanzund Prägematrize 64 zusammenwirkt.

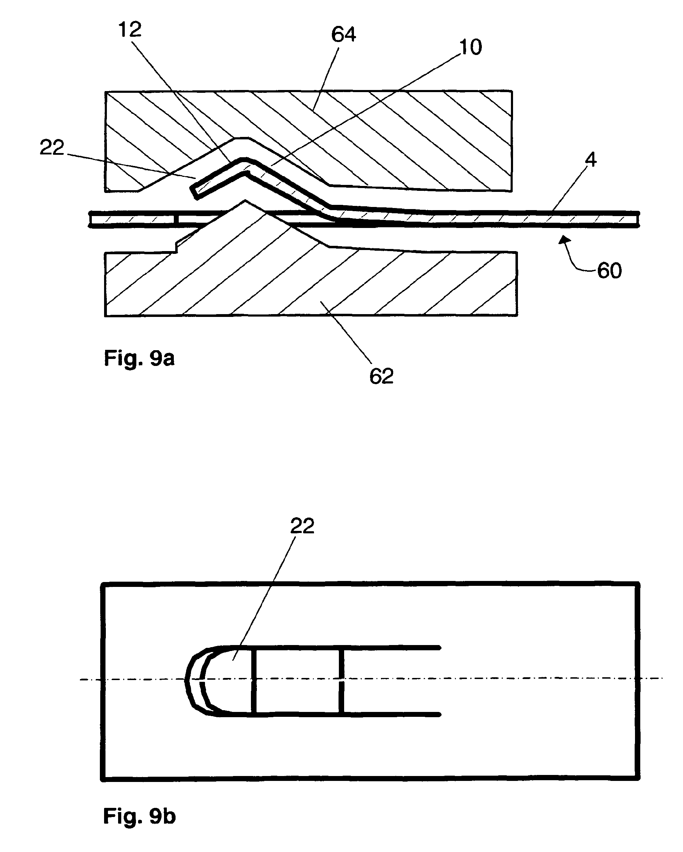

Hierbei wird zur Erzeugung der in Fig. 2 und 4 gezeigten Ausgestaltung des Hakens 6, der sich beim fertigen Pfahl 1 von der Außenfläche des Schenkels 4 wegerstreckende Endabschnitt 22, wie in Fig. 9a gezeigt, bereits mit dem Stanzvorgang in den zungenförmigen Abschnitt 12 eingeprägt, wobei zudem gleichzeitig auch die in Fig. 12 gezeigte konvexe Wölbung 40 vorzugsweise über die gesamte Länge des zungenförmigen Abschnitts 12 hinweg vom Zungengrund 10 aus in diesen eingeprägt wird. Die konvexe Wölbung 40 ist bei der Darstellung von Fig. 9a an der Oberseite des zungenförmigen Abschnitts 12 angeordnet.

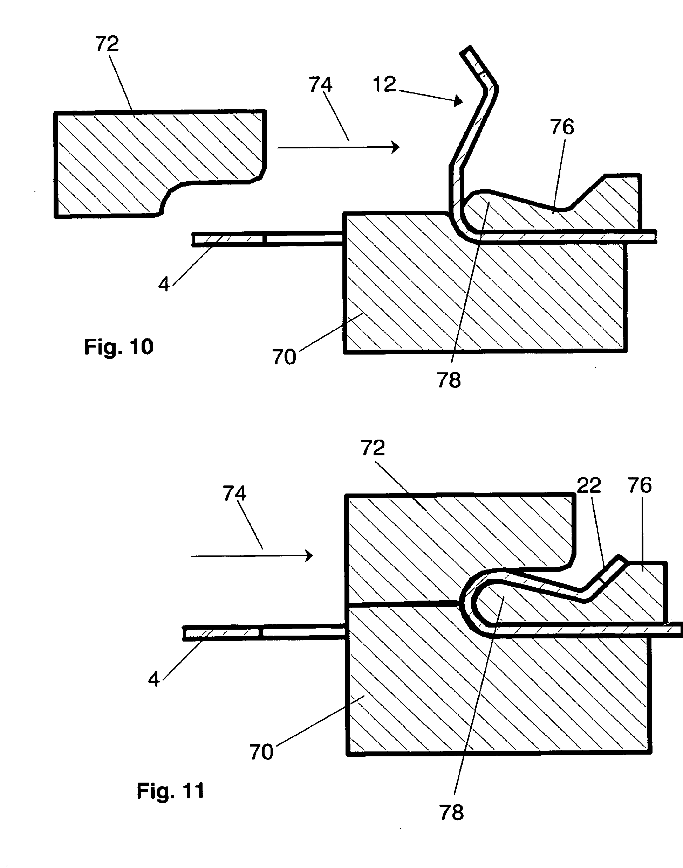

In einem nächsten Verfahrensschritt wird von unten her durch die Stanzöffnung 14 hindurch mit einem zweiten Prägestempel 70 die Bogenform in den zungenförmigen Abschnitt 12 zur Bildung des bogenförmigen Aufnahmeabschnitts 18 eingeprägt, wozu der zungenförmige Abschnitt 12 - wie in Fig. 10 gezeigt, vorzugsweise in etwa senkrecht nach oben abgebogen wird.

In dem sich anschließenden nächsten und letzten Schritt des Verfahrens wird ein drittes Prägewerkzeug 72 in einer im Wesentlichen parallel zur Außenfläche des Schenkels 4 verlaufenden Ebene in Richtung des in Fig. 11 gezeigten Pfeils 74 gegen den sich senkrecht von der Außenfläche wegerstreckenden zungenförmigen Abschnitt 12 bewegt, wobei gleichzeitig über eine weitere Prägematrize 76, die eine entsprechend der Bogenform des bogenförmigen Aufnahmeabschnitts 18 ausgestaltete Spitze 78 aufweist, ein entsprechender Gegendruck erzeugt wird, der den Haken 6 in seine endgültige Form zwingt.

Gewünschtenfalls kann auch das Zungenende 22 separat nochmals durch ein weiteres, nicht dargestelltes Prägewerkzeug nachgeprägt werden.

Gleichzeitig und/oder zusätzlich zum Prägevorgang können die mit den Schnittgraten behafteten Außenkanten des zungenförmigen Abschnitts 12 nachgeprägt werden, um die Schnittgrate von vornherein zu beseitigen. Dies kann beispielsweise durch ein entsprechendes Anphasen der Kanten der Außenkonturen erfolgen.

## Patentansprüche

1. Pfahl mit wenigstens einem Haken zum Halten eines Drahtes (8) im Wein- und Obstbau, der einen Grundkörper (2) mit wenigstens einem Schenkel (4) aus Metallblech aufweist, an dem der Haken (6) durch Ausstanzen und Biegen eines sich von einem Zungengrund (10) zu einem freien Ende hin erstreckenden zungenförmigen Abschnitts (12) aus dem Metallblech erzeugt wird,
**dadurch gekennzeichnet,**
**dass** der zungenförmige Abschnitt (12) unter Bildung eines im Querschnitt bogenförmigen Aufnahmeabschnitts (18) für den Draht (8) ausgehend vom Zungengrund (10) von der Stanzöffnung (14) weg um mehr als 90 ° in Rückwärtsrichtung (16) gebogen ist, derart, dass der Aufnahmeabschnitt (18) zumindest teilweise, und ein sich anschließender Führungsabschnitt (20) vollständig außerhalb der Stanzöffnung (14) über einem geschlossenen Bereich der Außenfläche des Schenkels (4) angeordnet sind, so dass die Außenfläche im Falle einer Schlageinwirkung von außen her als Stützfläche dient, die ein Eindrücken des Hakens (6) in die Stanzöffnung (14) verhindert.

2. Pfahl nach Anspruch 1,
**dadurch gekennzeichnet,**
**dass** der bogenförmige Aufnahmeabschnitt(18) einen im Wesentlichen C-förmigen Querschnitt besitzt.

3. Pfahl nach Anspruch 2,
**dadurch gekennzeichnet,**
**dass** sich an den bogenförmigen Aufnahmeabschnitt (18) ein im Wesentlichen geradliniger Führungsabschnitt (20) anschließt.

4. Pfahl nach Anspruch 3,
**dadurch gekennzeichnet,**
**dass** sich der geradlinige Führungsabschnitt (20) vom Ende des Aufnahmeabschnitts (18) aus in Richtung zur Außenfläche des Schenkels (4) hin erstreckt.

5. Pfahl nach Anspruch 3 oder 4,
**dadurch gekennzeichnet,**
**dass** sich an den bogenförmigen Aufnahmeabschnitt (18) und/oder an den geradlinigen Führungsabschnitt (20) ein parallel zu Außenfläche verlaufender oder von der Außenfläche des Schenkels (4) weg gerichteter, im Wesentlichen geradliniger Endabschnitt (22) anschließt, der zusammen mit der Außenfläche des Schenkels (4) eine sich erweiternde Einlegeöffnung (24) für den Draht (8) definiert.

6. Pfahl nach Anspruch 3 oder 4,
**dadurch gekennzeichnet,**
**dass** sich an den bogenförmigen Aufnahmeabschnitt (18) und/oder an den geradlinigen Führungsabschnitt (20) ein zur Außenfläche des Schenkels (4) hin gerichteter bogenförmiger Endabschnitt (26) anschließt.

7. Pfahl nach Anspruch 6,
**dadurch gekennzeichnet,**
**dass** das Ende des bogenförmigen Endabschnitts (26) in geringem Abstand zur Außenfläche des Schenkels (4) angeordnet ist oder an dieser anliegt.

8. Pfahl nach Anspruch 7,
**dadurch gekennzeichnet,**
**dass** das Ende des bogenförmigen Endabschnitts (26) in einer in der Außenfläche des Schenkels (4) gebildeten Vertiefung (28) aufgenommen ist.

9. Pfahl nach Anspruch 3,
**dadurch gekennzeichnet,**
**dass** der im Wesentlichen geradlinige Führungsabschnitt (20) sich in einer im Wesentlichen parallel zur Außenfläche des Schenkels (4) verlaufenden Ebene erstreckt.

10. Pfahl nach Anspruch 9,
**dadurch gekennzeichnet,**
**dass** zur Bildung eines Doppelhakens (30) ein weiterer Haken (6d) spiegelbildlich zum Haken (6a) an der Außenfläche des Schenkels(4) geformt ist, wobei sich die freien Enden der im Wesentlichen geradlinigen Führungsabschnitte (20a, 20b) in der im Wesentlichen parallel zur Außenfläche des Schenkels (4) verlaufenden Ebene gegenüberliegen, und zwischen dem Zungengrund (10a) des Hakens (6a) sowie dem Zungengrund (10b) des weiteren Hakens (6b) ein Abstand (d) besteht, der größer als die zweifache Länge der geradlinigen Führungsabschnitte (20a, 20b) ist.

11. Pfahl nach Anspruch 10,
**dadurch gekennzeichnet,**
**dass** die Kanten der Enden der im Wesentlichen geradlinigen Führungsabschnitte (20a, 20b) des Hakens (6a) sowie des weiteren Hakens (6b) parallel im Abstand (d) zueinander verlaufen, wobei der Abstand (d) größer als der Durchmesser des Drahtes (8) ist.

12. Pfahl nach Anspruch 11,
**dadurch gekennzeichnet,**
**dass** die Kanten der Enden der im Wesentlichen geradlinigen Führungsabschnitte (20a, 20b) im Winkel zu einer gedachten Verbindungslinie (36) zwischen dem Zungengrund (10a) des Hakens (6a) sowie dem Zungengrund (10b) des weiteren Hakens (6b) angeordnet sind.

13. Pfahl nach einem der vorhergehenden Ansprüche,
**dadurch gekennzeichnet,**
**dass** der im Querschnitt bogenförmige Aufnahmeabschnitt (18) mit einer auf der Innenseite konvexen Wölbung (40) versehen ist, die eine sich vom Zungengrund (10) aus erstreckende innenliegende Anlagefläche (42) für den Draht (8) definiert.

14. Pfahl nach einem der Ansprüche 3 bis 13,
**dadurch gekennzeichnet,**
**dass** der im Wesentlichen geradliniger Führungsabschnitt (18) mit einer in Richtung zur Außenfläche des Schenkels (4) weisenden konvexen Wölbung (40) versehen ist.

15. Pfahl nach Anspruch 5,
**dadurch gekennzeichnet,**
**dass** der geradlinige Endabschnitt (22) mit einer in Richtung zur Außenfläche des Schenkels (4) weisenden konvexen Wölbung (40) versehen ist.

16. Pfahl nach Anspruch 15,
**dadurch gekennzeichnet,**
**dass** die konvexe Wölbung als eine in den Endabschnitt (22) eingebrachte tellerförmige Vertiefung (40a) ausgestaltet ist.

17. Pfahl nach Anspruch 6,
**dadurch gekennzeichnet,**
**dass** der bogenförmige Endabschnitt mit einer in Richtung zur Außenfläche des Schenkels weisenden konvexen Wölbung versehen ist.

18. Pfahl nach einem der Ansprüche 13 bis 17,
**dadurch gekennzeichnet,**
**dass** die Wölbung beim Ausstanzen des zungenförmigen Abschnitts durch ein zentral auf diesen einwirkendes Prägewerkzeug erzeugt wird.

19. Verfahren zur Herstellung eines Pfahls nach einem der vorhergehenden Ansprüche, **gekennzeichnet durch** die folgenden Verfahrensschritte:
Biegen eines im Wesentlichen ebenen Metallblechs zu einem einen Schenkel (4) aufweisenden Grundkörper (2),
Ausstanzen eines zungenförmigen Abschnitts (12) mittels eines ersten Stanzwerkzeugs (62) von der Innenseite (60) des Grundkörpers (2) aus, und
Biegen des entstandenen zungenförmigen Abschnitts (12) ausgehend vom Zungengrund (10) des zungenförmigen Abschnitts (12) bogenförmig um wenigstens 90° von der Stanzöffnung (14) weg in Rückwärtsrichtung (16).

20. Verfahren nach Anspruch 19,
**dadurch gekennzeichnet,**
**dass** der zungenförmige Abschnitt (12) beim Ausstanzen zusammen mit einer auf der Außenseite des Schenkels (4) konvex gewölbten Sicke versehen wird.

21. Verfahren nach Anspruch 20,
**dadurch gekennzeichnet,**
**dass** dem zungenförmigen Abschnitt (12) gleichzeitig mit dem Ausstanzen aus der Stanzöffnung (14) ein abgewinkelter, im Wesentlichen geradliniger Endabschnitt (22) aufgeprägt wird, der sich nach dem Ausstanzen und Prägen im Winkel zur Außenfläche des Schenkels (4) hin erstreckt.

22. Verfahren nach einem der Ansprüche 19 bis 21,
**dadurch gekennzeichnet,**
**dass** der zungenförmige Abschnitt (12) um eine auf der Außenseite des Schenkels (4) angeordnete Prägematrize (76) mit einer der Bogenform des bogenförmigen Aufnahmeabschnitts (18) angepassten Spitze (78) herumgebogen wird.

23. Verfahren nach einem der Ansprüche 19 bis 22,
**dadurch gekennzeichnet,**
**dass** das Biegen des zungenförmigen Abschnitts (12) durch ein von der Innenseite (60) des Schenkels (4) her durch die Stanzöffnung (14) hindurch auf den zungenförmigen Abschnitt (12) einwirkendes Rotationswerkzeug erfolgt.

24. Verfahren nach einem der Ansprüche 19 bis 22,
**dadurch gekennzeichnet,**
**dass** das Biegen des zungenförmigen Abschnitts (12) durch mehrere nacheinander in Richtung senkrecht zur Außenfläche des Schenkels (4) sowie in Richtung parallel hierzu auf den zungenförmigen Abschnitt (12) einwirkende Prägewerkzeuge (70, 72, 76) erfolgt.

25. Verfahren nach einem der Ansprüche 19 bis 24,
**dadurch gekennzeichnet,**
**dass** die mit Schnittgraten behafteten Außenkanten des zungenförmigen Abschnitts (12) nach dem Ausstanzen zur Beseitigung der Schnittgrate abgedrückt, insbesondere angephast werden.

## Claims

1. Stake comprising at least one hook for retaining a wire (8) and designed for vineyards and orchards, said stake comprises a base element (2) provided with at least one sheet metal shank (4), whereon the hook (6) is produced by punching out and bending a segment (12) of sheet metal which then forms a tab extending from the base (10) towards a free end **characterised in that,**
the tab-shaped segment (12) is bent backwards (16) at an angle of at least 90° from the opening of the cutout (14), thus forming for the wire (8) a receiving segment (18) curved in cross section from the tab base (10), such that the receiving segment (18), at least partially, and an adjacent guide section (20) are arranged completely outside the opening of the cutout (14) over a closed area of the outer surface of the shank (4), so that the outer surface serves as a support face preventing the hook (6) being forced into the opening of the cutout (14) in the event of an impact from outside.

2. Stake in accordance with claim 1,
**characterised in that,**
the curved receiving segment (18) is essentially C-shaped in cross section.

3. Stake in accordance with claim 2,
**characterised in that,**
an essentially rectilinear guide section (20) is attached to the curved receiving segment (18).

4. Stake in accordance with claim 3,
**characterised in that,**
the rectilinear guide section (20) extends from the end of the receiving segment (18) towards the outer surface of the shank (4).

5. Stake in accordance with claim 3 or 4,
**characterised in that,**
an essentially rectilinear end section (22), running parallel to the outer surface or directed away from the outer surface of the shank (4), is attached to the curved receiving segment (18) and/or to the rectilinear guide section (20), which end section, together with the outer surface of the shank (4), defines a widening insertion opening (24) for the wire (8).

6. Stake in accordance with claim 3 or 4,
**characterised in that,**
an end section (26) curved towards the outer surface of the shank (4) is attached to the curved receiving segment (18) and/or to the rectilinear guide section (20).

7. Stake in accordance with claim 6,
**characterised in that,**
the end of the curved end section (26) is arranged a short distance away from the outer surface of the shank (4) or rests on it.

8. Stake in accordance with claim 7,
**characterised in that,**
the end of the curved end section (26) is located in a recess (28) formed in the outer surface of the shank (4).

9. Stake in accordance with claim 3,
**characterised in that,**
the essentially rectilinear guide section (20) extends in a plane running essentially parallel to the outer surface of the shank (4).

10. Stake in accordance with claim 9,
**characterised in that,**
in order to form a double hook (30), another hook (6d) is formed as a mirror image of hook (6a) on the outer surface of the shank (4), whereby the free ends of the essentially rectilinear guide sections (20a, 20b) lie opposite each other essentially parallel to the outer surface of the shank (4), and a gap (d) exists between the tab base (10a) of hook (6a) and the tab base (10b) of the other hook (6b), whereby said gap is greater than twice the length of the rectilinear guide sections (20a, 20b).

11. Stake in accordance with claim 10,
**characterised in that,**
the edges of the ends of the essentially rectilinear guide sections (20a, 20b) of hook (6a) and those of the other hook (6b) run parallel to each other in gap (d), whereby the gap (d) is larger than the diameter of the wire (8).

12. Stake in accordance with claim 11,
**characterised in that,**
the edges of the ends of the essentially rectilinear guide sections (20a, 20b) are arranged at an angle to an imaginary connecting line (36) between the tab base (10a) of the hook (6a) and the tab base (10b) of the other hook (6b).

13. Stake in accordance with one of the foregoing claims,
**characterised in that,**
the receiving segment (18) curved in cross section is provided with a convex bulge (40) on its inner side which defines an inner resting surface (42) for the wire (8) extending outwards from the tab base (10).

14. Stake in accordance with one of claims 3 to 13,
**characterised in that,**
the essentially rectilinear guide section (18)¹ is provided with a convex bulge (40) pointing towards the outer surface of the hook (4).

15. Stake in accordance with claim 5,
**characterised in that,**
the rectilinear end section (22) is provided with a convex bulge (40) pointing towards the outer surface of the shank (4).

16. Stake in accordance with claim 15,
**characterised in that,**
the convex bulge (40) is designed as a plate-shaped recess (40a) incorporated in the end section (22).

17. Stake in accordance with claim 6,
**characterised in that,**
the curved end section is provided with a convex bulge pointing towards the outer surface of the shank.

18. Stake in accordance with one of claims 13 to 17,
**characterised in that,**
the bulge is produced by punching out the tab-shaped segment with a punching tool acting on it centrally.

19. Method of producing a stake in accordance with one of the foregoing claims, **characterised by** the following operations:
Bending an essentially flat metal sheet into a base element (2) incorporating a shank (4),
Punching out a tab-shaped segment (12) by means of a first punching tool (62) from the inner side (60) of the base element (2) outwards, and
Bending the tab-shaped segment (12) thus formed starting from the tab base (10) of the tab-shaped segment (12), bending it backwards (16) by at least 90° from the opening of the cutout (14)

20. Method in accordance with claim 19,
**characterised in that,**
during punching out, the tab-shaped segment (12) is provided at the same time with a convex dome on the outer side of the shank (4).

21. Method in accordance with claim 20,
**characterised in that,**
at the same time that it is being punched out of the opening of the cutout (14), an angled, essentially rectilinear end section (22) is stamped out from the tab-shaped segment (12), whereby the end section extends at an angle to the outer surface of the shank (4) after punching and stamping.

22. Method in accordance with one of claims 19 to 21,
**characterised in that,**
the tab-shaped segment (12) is bent around a stamping die (76) arranged on the outer surface of the shank (4) with a tip (78) matching the curved shape of the curved receiving segment (18).

23. Method in accordance with one of claims 19 to 22,
**characterised in that,**
the bending of the tab-shaped segment (12) is achieved by a rotating tool acting on the tab-shaped segment (12) from the inner side (60) of the shank (4) through the opening of the cutout (14).

24. Method in accordance with one of claims 19 to 22,
**characterised in that**, the bending of the tab-shaped segment (12) is achieved by several stamping tools (70, 72, 76) acting one after the other on the tab-shaped segment (12) in a direction perpendicular to the outer surface of the shank (4) as well as parallel to it.

25. Method in accordance with one of claims 19 to 24,
**characterised in that,**
in order to remove burrs after punching out, the outer edges of the tab-shaped segment (12) with the burrs are pressed back, in particular, chamfered.

## Revendications

1. Piquet pourvu d'au moins un crochet pour maintenir un fil (8) en viticulture et en arboriculture fruitière, qui comprend un corps de base (2) avec au moins une aile (4) en tôle métallique sur laquelle on produit le crochet (6) à partir de la tôle métallique en découpant et en pliant un segment en forme de languette (12) s'étendant d'une base de languette (10) vers une extrémité libre,
**caractérisé en ce que**
le segment en forme de languette (12) est plié à plus de 90° dans la direction vers l'arrière (16) en partant de la base de languette (10) et en s'éloignant de l'ouverture de découpe (14), formant ainsi un segment de réception (18) de section transversale courbe pour le fil (8), de telle sorte qu'au moins une partie du segment de réception (18) et la totalité d'un segment de guidage (20) adjacent à celui-ci se trouvent en dehors de l'ouverture de découpe (14), en regard d'une zone fermée de la surface extérieure de l'aile (4) de manière à ce que la surface extérieure serve de surface d'appui qui empêche le crochet (6) de s'enfoncer dans l'ouverture de découpe (14) en cas de coup porté de l'extérieur.

2. Piquet selon la revendication 1, **caractérisé en ce que** le segment de réception courbé (18) a une section transversale essentiellement en forme de C.

3. Piquet selon la revendication 2, **caractérisé en ce qu'**un segment de guidage (20) essentiellement rectiligne est adjacent au segment de réception courbé (18).

4. Piquet selon la revendication 3, **caractérisé en ce que** le segment de guidage rectiligne (20) s'étend de la fin du segment de réception (18) en direction de la surface extérieure de l'aile (4).

5. Piquet selon la revendication 3 ou 4, **caractérisé en ce qu'**un segment d'extrémité (22) essentiellement rectiligne s'étendant parallèlement à la surface extérieure ou s'écartant de la surface extérieure de l'aile (4), lequel segment définit, avec la surface extérieure de l'aile (4), une ouverture d'insertion (24) s'élargissant pour le fil (8), est adjacent au segment de réception courbé (18) et/ou au segment de guidage rectiligne (20).

6. Piquet selon la revendication 3 ou 4, **caractérisé en ce qu'**un segment d'extrémité courbé (26) dirigé vers la surface extérieure de l'aile (4) est adjacent au segment de réception courbé (18) et/ou au segment de guidage rectiligne (20).

7. Piquet selon la revendication 6, **caractérisé en ce que** l'extrémité du segment d'extrémité courbé (26) se trouve à faible distance de la surface extérieure de l'aile (4) ou est en contact avec elle.

8. Piquet selon la revendication 7, **caractérisé en ce que** l'extrémité du segment d'extrémité courbé (26) est reçue dans un creux (28) formé dans la surface extérieure de l'aile (4).

9. Piquet selon la revendication 3, **caractérisé en ce que** le segment de guidage (20) essentiellement rectiligne s'étend dans un plan qui est essentiellement parallèle à la surface extérieure de l'aile (4).

10. Piquet selon la revendication 9, **caractérisé en ce que**, pour former un double crochet (30), un deuxième crochet (6d) est formé symétriquement au crochet (6a) sur la surface extérieure de l'aile (4), les extrémités libres des segments de guidage (20a, 20b) essentiellement rectilignes se faisant face dans le plan essentiellement parallèle à la surface extérieure de l'aile (4) et une distance (d) supérieure au double de la longueur des segments de guidage rectilignes (20a, 20b) existant entre la base de languette (10a) du crochet (6a) et la base de languette (10b) du deuxième crochet (6b).

11. Piquet selon la revendication 10, **caractérisé en ce que** les bords des extrémités des segments de guidage (20a, 20b) essentiellement rectilignes du crochet (6a) et du deuxième crochet (6b) s'étendent parallèlement l'un à l'autre à une distance (d), la distance (d) étant supérieure au diamètre du fil (8).

12. Piquet selon la revendication 11, **caractérisé en ce que** les arêtes des extrémités des segments de guidage (20a, 20b) essentiellement rectilignes sont orientées suivant un angle par rapport à une ligne de jonction imaginaire (36) entre la base de languette (10a) du crochet (6a) et la base de languette (10b) du deuxième crochet (6b).

13. Piquet selon l'une des revendications précédentes, **caractérisé en ce que** le segment de réception (18) de section transversale courbe est pourvu d'une partie bombée (40) convexe sur le côté intérieur, qui définit pour le fil (8) une surface d'appui interne (42) s'étendant depuis la base de languette (10).

14. Piquet selon l'une des revendications 3 à 13, **caractérisé en ce que** le segment de guidage (18) essentiellement rectiligne est pourvu d'une partie bombée convexe (40) dirigée vers la surface extérieure de l'aile (4).

15. Piquet selon la revendication 5, **caractérisé en ce que** le segment d'extrémité rectiligne (22) est pourvu d'une partie bombée convexe (40) dirigée vers la surface extérieure de l'aile (4).

16. Piquet selon la revendication 15, **caractérisé en ce que** la partie bombée convexe est exécutée comme une empreinte (40a) en forme d'assiette dans le segment d'extrémité (22).

17. Piquet selon la revendication 6, **caractérisé en ce que** le segment d'extrémité courbé est pourvu d'une partie bombée convexe dirigée vers la surface extérieure de l'aile.

18. Piquet selon l'une des revendications 13 à 17, **caractérisé en ce que** la partie bombée est produite lors du découpage du segment en forme de languette au moyen d'un outil d'emboutissage exerçant une action au centre du segment.

19. Procédé de fabrication d'un piquet selon l'une des revendications précédentes, **caractérisé par** les étapes de procédé suivantes :
pliage d'une tôle métallique essentiellement plane pour obtenir un corps de base (2) présentant une aile (4),
découpage d'un segment en forme de languette (12) depuis le côté intérieur (60) du corps de base (2) au moyen d'un premier outil de découpage (62) et
pliage en arc du segment en forme de languette (12) obtenu sur au moins 90° dans la direction vers l'arrière, en partant de la base de languette (10) du segment en forme de languette (12) et en s'éloignant de l'ouverture de découpe (14).

20. Procédé selon la revendication 19, **caractérisé en ce que** le segment en forme de languette (12) est pourvu, simultanément au découpage, d'une moulure bombée convexe sur le côté extérieur de l'aile (4).

21. Procédé selon la revendication 20, **caractérisé en ce qu'**un segment d'extrémité (22) essentiellement rectiligne plié est obtenu par emboutissage du segment en forme de languette (12) simultanément au découpage à travers l'ouverture de découpe (14), lequel segment d'extrémité s'étend de manière angulaire par rapport à la surface extérieure de l'aile (4) après le découpage et l'emboutissage.

22. Procédé selon l'une des revendications 19 à 21, **caractérisé en ce que** le segment en forme de languette (12) est plié autour d'une matrice d'emboutissage (76) située sur le côté extérieur de l'aile (4) et dont le poinçon (78) est adapté à la forme arquée du segment de réception courbé (18).

23. Procédé selon l'une des revendications 19 à 22, **caractérisé en ce que** le pliage du segment en forme de languette (12) est obtenu au moyen d'un outil rotatif exerçant une action sur le segment en forme de languette (12) depuis le côté intérieur (60) de l'aile (4) en passant à travers l'ouverture de découpe (14).

24. Procédé selon l'une des revendications 19 à 22, **caractérisé en ce que** le pliage du segment en forme de languette (12) est obtenu au moyen de plusieurs outils d'emboutissage (70, 72, 76) exerçant une action sur le segment en forme due languette (12) les uns après les autres dans la direction perpendiculaire à la surface extérieure de l'aile (4) et dans la direction parallèle à celle-ci.

25. Procédé selon l'une des revendications 19 à 24, **caractérisé en ce que** les bords extérieurs du segment en forme de languette (12), qui présentent des bavures, sont aplatis, notamment chanfreinés, après le découpage pour éliminer les bavures.
